# FASCICULE DE BREVET EUROPEEN

(11) **EP 2 186 683 B1**
(45) Date de publication et mention de la délivrance du brevet: **08.02.2012**
(21) Numéro de dépôt: 09306081.2
(22) Date de dépôt: 10.11.2009
(51) Int. Cl.: B60R 5/04

(54) **Dispositif de masquage arrière de véhicule automobile et ensemble arrière associé**
Laderaumabdeckung für Kraftfahrzeug und entsprechende Eckeinheit
Vehicle rear load compartment cover and a corresponding rear assembly

(30) Priorité: 14.11.2008 FR 0857765
(43) Date de publication de la demande: 19.05.2010
(73) Titulaire: Faurecia Automotive Industrie, 92000 Nanterre (FR)
(72) Inventeur: Decorme, Jacques, 08900 MONTCY NOTRE DAME (FR); Jeunehomme, Franck, 08800 MONTHERME (FR)
(74) Mandataire: Jacobson, Claude

(56) Documents cités:
- EP-A- 1 452 393
- EP-A- 1 880 902
- FR-A- 2 850 917

## Description

La présente invention concerne un dispositif de masquage arrière de véhicule automobile, selon le préambule de la revendication 1.

Un tel dispositif comprend une tablette articulée transversalement entre les flancs du véhicule automobile pour séparer le coffre en un compartiment inférieur, dans lequel des objets présents dans le coffre sont masqués par la tablette, et un compartiment supérieur dans lequel des objets peuvent être portés par la tablette.

Lors de l'ouverture du coffre, la tablette peut être inclinée par rapport à sa position de repos horizontale en appui sur les supports, soit par une action manuelle de l'utilisateur, soit par des cordons reliant la tablette au hayon.

Pour monter une tablette de ce type dans les flancs du véhicule, il est connu d'utiliser un mécanisme d'articulation comprenant des axes transversaux rapportés de part et d'autre de la tablette autour de son axe de rotation. Les axes sont insérés dans des logements cylindriques complémentaires ménagés dans les flancs du véhicule. Une telle tablette est coûteuse à fabriquer.

Pour pallier ce problème, FR 2 850 917 propose une tablette dépourvue d'axes passant par son axe de rotation. Cette tablette comprend latéralement une première surface de butée coopérant avec une surface de butée complémentaire solidaire des supports lors du pivotement de la tablette.

La tablette comprend en outre une surface de retenue coopérant, en fin de course de la tablette, avec une surface de retenue complémentaire.

La tablette est insérée dans les supports en l'inclinant par rapport à sa position horizontale.

Puis, lorsqu'une force de traction dirigée au moins partiellement vers l'avant du véhicule est exercée, la tablette pivote jusqu'à sa position inclinée de fin de course. Cette tablette est actionnée manuellement.

Une telle tablette donne donc satisfaction lorsque la force d'actionnement de la tablette est dirigée en permanence vers l'avant du véhicule automobile.

Toutefois, lorsque la tablette est opérée manuellement pour la faire passer de sa position horizontale à sa position inclinée de fin de course, il existe un risque élevé qu'elle sorte de ses supports, par exemple lorsque l'utilisateur tire la tablette vers l'arrière en la relevant.

Si l'utilisateur referme le hayon sans contrôler le bon positionnement de la tablette celle-ci peut se briser.

EP 1452 393 décrit un autre dispositif de masquage arrière selon la préambule de la revendication. Un but de l'invention est donc de créer un dispositif de masquage arrière peu coûteux et adaptable à différents types de véhicules automobiles, la tablette étant pivotable autour de son axe sans risque majeur de sortie des supports, par exemple lorsque l'utilisateur tire vers l'arrière la tablette en la relevant.

Si l'utilisateur referme le hayon sans contrôler le bon positionnement de la tablette, celle-ci peut se briser.

A cet effet, l'invention a pour objet un dispositif selon la revendication 1.

Le dispositif selon l'invention peut comprendre une ou plusieurs des caractéristiques des revendications 2 à 8.

L'invention a également pour objet un ensemble arrière de véhicule automobile selon la revendication 9.

L'ensemble selon l'invention peut comprendre la caractéristique de la revendication 10.

L'invention sera mieux comprise à la lecture de la description qui va suivre, donnée uniquement à titre d'exemple, et faite en se référant aux dessins annexés, sur lesquels:
- la Figure 1 est une vue en coupe suivant un plan vertical longitudinal des parties pertinentes d'un premier ensemble arrière de véhicule automobile dans lequel la tablette est pivotée par des cordons;
- la Figure 2 est une vue partielle en perspective, prise de trois-quarts face et en coupe partielle, de l'ensemble de la Figure 1, la tablette ayant été extraite des supports;
- la Figure 3 est une vue de côté en coupe partielle de long du plan vertical longitudinal III de la Figure 2, la tablette occupant sa position horizontale de repos en appui sur les supports;
- la Figure 4 est une vue analogue à la Figure 3 dans une position intermédiaire inclinée de la tablette;
- la Figure 5 est une vue analogue à la Figure 1 d'un deuxième ensemble arrière selon l'invention dans laquelle la tablette est pivotée manuellement ; et
- la Figure 6 est une vue analogue à la Figure 1 d'un troisième ensemble arrière selon l'invention.

Dans tout ce qui suit, les orientations sont les orientations habituelles d'un véhicule automobile. Ainsi, les termes "arrière", "avant", "supérieur", "inférieur", "extérieur", "intérieur", "longitudinal", "transversal", "gauche", "droite", s'entendent par rapport au sens normal de circulation du véhicule automobile et à la position d'un conducteur.

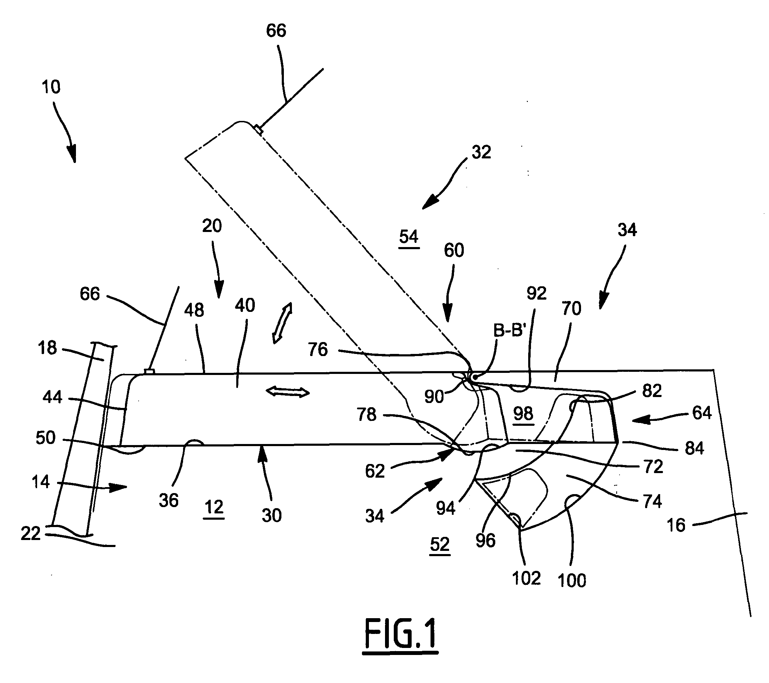

Un premier ensemble arrière 10 de véhicule automobile est illustré par les Figures 1 à 4.

Cet ensemble arrière 10 définit un coffre 12 du véhicule automobile. Il comprend un plancher (non représenté) qui délimite le coffre 12 vers le bas, des flancs latéraux 14, dont seul le flanc gauche est représenté sur la Figure 1, qui délimitent le coffre 12 latéralement à gauche et à droite, et au moins un siège 16 du véhicule qui délimite le coffre 12 vers l'avant.

L'ensemble arrière 10 comprend en outre un hayon 18 mobile destiné à obturer vers l'arrière et vers le haut le coffre 12.

L'ensemble arrière 10 comprend également un premier dispositif de masquage 20 selon l'invention, qui sera décrit en détail plus bas.

Les flancs 14 s'étendent dans l'habitacle du véhicule automobile, de part et d'autre du coffre 12. Chaque flanc 14 comprend une paroi 22 sensiblement verticale délimitant latéralement le coffre 12.

Le hayon 18 est articulé sur le pavillon (non représenté) du véhicule le long de son bord supérieur, autour d'un axe transversal de hayon.

Il est mobile en rotation entre une position d'obturation du coffre 12, dans laquelle il s'étend à l'arrière des flancs 14 en contact avec les flancs 14, et une position ouverte d'accès au coffre, dans laquelle il a été pivoté vers le haut et vers l'avant.

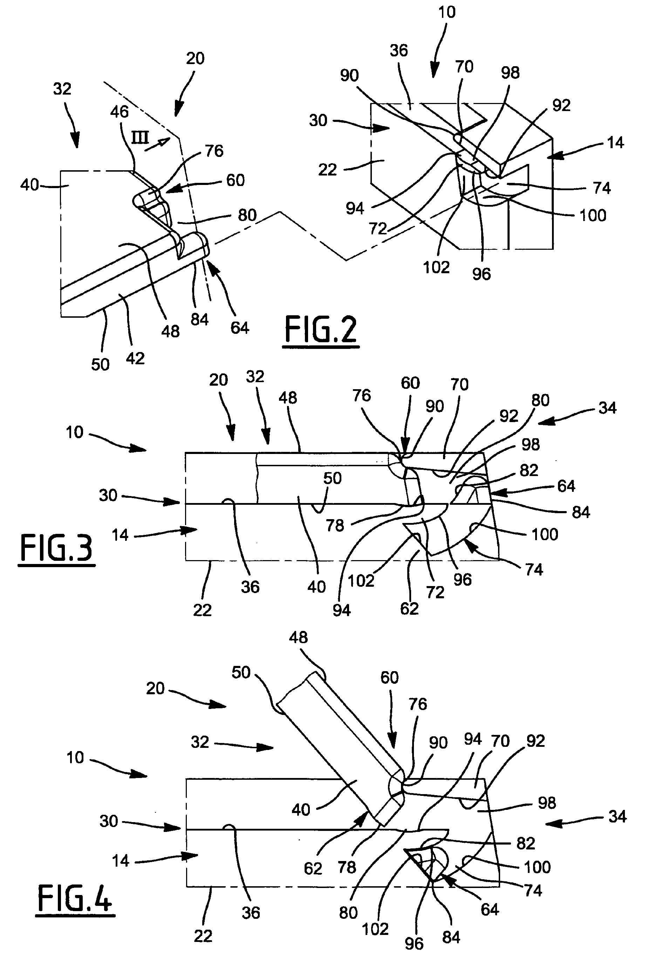

Le dispositif de masquage 20 comprend, en référence aux Figures 1 et 2, des supports 30 solidaires respectivement de chaque flanc 14, une tablette 32 de support d'objets, destinée à cloisonner le coffre 12 pour le séparer en deux compartiments, et un mécanisme 34 d'articulation de la tablette 32 dans les supports 30.

Les supports 30 comprennent, dans cet exemple, des appuis plans 36 sensiblement horizontaux délimités par chacun des flancs 14, de part et d'autre de la tablette 32.

Dans cet exemple, les appuis plans 36 sont situés le long du bord supérieur de la paroi verticale 22 et s'étendent sur une partie de la longueur de la tablette 32 située de préférence à l'arrière. En variante, ils s'étendent sur toute la longueur de la tablette 32.

Chaque appui plan 36 délimite une surface supérieure d'appui de la tablette 32 lorsque la tablette 32 occupe une position horizontale de repos.

Chaque appui plan 36 est formé par un gradin longitudinal ménagé le long du bord supérieur de la paroi verticale 22, comme illustré par la Figure 2.

La tablette 32 comprend un corps 40 de tablette s'étendant sensiblement dans un plan moyen de tablette. Il présente une section globalement rectangulaire prise dans son plan moyen.

Le corps 40 s'étend entre un bord avant 42 placé au voisinage des sièges arrière 16, et un bord arrière 44 destiné à être placé au voisinage du hayon 18 lorsque le hayon 18 obture le coffre 12.

Le corps 40 s'étend en outre transversalement sur toute la largeur du coffre 12 entre l'appui plan 36 du flanc gauche 14 et l'appui plan du flanc droit (non représenté).

La largeur de la tablette 32, prise entre le bord gauche 46 et le bord droit est supérieure à la distance séparant les appuis plans respectifs 36 en regard de chaque flanc 14.

Le corps de la tablette 40 est avantageusement réalisé en matière thermoplastique éventuellement renforcée par des fibres ou du métal et peut être revêtu de textile tel que de la moquette, un non-tissé ou un tissu. Il présente une surface supérieure 48 sur laquelle peuvent être disposés en appui des objets de masse supérieure à plusieurs dizaines de grammes sans déformation significative de la tablette.

Le corps 40 présente en outre une surface inférieure 50 destinée à s'appuyer sur les appuis plans 36 le long du bord gauche 46 et du bord droit.

Comme on le verra plus bas, la tablette 32 est montée mobile en rotation par rapport aux supports 30 par l'intermédiaire du mécanisme d'articulation 34 autour d'un axe transversal B-B' d'articulation fixe, entre une position de repos sensiblement horizontale, une pluralité de positions inclinées intermédiaires, et une position inclinée de fin de course représentée en pointillés sur la Figure 1.

Comme on le verra plus bas, la tablette 32 est en outre déplaçable depuis sa position horizontale de repos entre une configuration engagée dans les supports 30 et dans le mécanisme d'articulation 34, et une configuration désengagée hors du mécanisme 34 et à l'écart des supports 30, dans laquelle la tablette 32 peut être extraite hors du coffre 12.

Comme on le verra plus bas, la tablette 32 ne peut être désengagée hors du mécanisme 34 à l'écart des supports 30 que dans sa position horizontale. Dans chaque position inclinée, la tablette 32 est retenue dans les supports 30 par le mécanisme 34.

Dans la position horizontale, la tablette 32 est disposée en appui sur les appuis plans 36.

Elle s'étend sur toute la largeur du véhicule entre les flancs 14. Elle délimite dans le coffre 12 un compartiment inférieur 52 de stockage d'objets masqué vers le haut par la tablette 32 et un compartiment supérieur 54 visible depuis l'extérieur du véhicule à travers une vitre du hayon 18.

Dans chaque position intermédiaire, entre la position horizontale et la position inclinée de fin de course, la tablette 32 a pivoté autour de l'axe transversal B-B' par déplacement de son bord arrière 44 vers le haut et vers l'avant. La tablette 32 est bloquée en position radiale autour de l'axe B-B' par le mécanisme d'articulation 34, comme on va le décrire plus bas.

Selon l'invention, la tablette 32 est dépourvue de pivots passant par son axe de rotation B-B'. Le mécanisme d'articulation 34 de la tablette 32 sur les supports 30 comprend, dans chaque coin avant de la tablette 32, une marche supérieure 60 de pivotement de la tablette, un bossage inférieur 62 de guidage, et une saillie transversale 64 de retenue de la tablette dans chaque position inclinée, disposée à l'avant et à l'écart de la marche 60 et du bossage 62.

Le mécanisme 34 comprend en outre, pour chaque support 30, une paroi de pivotement 70 destinée à coopérer avec la marche 60 en regard, une paroi de guidage 72 destinée à recevoir le bossage 62, et une coulisse 74 de retenue de la saillie 64.

Dans tout ce qui suit, seule la partie du mécanisme 34 présente dans le coin avant gauche de la tablette 32, et dans le support gauche 30 en regard, seront décrites. La partie correspondante du mécanisme 34 présente dans le coin avant droit et dans le support droit est de structure symétrique et ne sera pas décrite.

Dans cet exemple, la marche 60, le bossage 62 et la saillie 64 sont d'un seul tenant avec le corps 40 de la tablette 32 pour faciliter la réalisation de la tablette 32 et diminuer son coût.

La marche 60 présente une concavité dirigée vers l'avant. Elle est formée dans la surface supérieure du corps 40 au voisinage du bord latéral 46, à l'arrière du bord avant 42. Elle définit une surface supérieure 76 de butée sur la paroi 70.

La surface du butée 76 présente une concavité dirigée vers l'avant. Elle présente une section, prise dans un plan vertical longitudinal sensiblement en forme d'arc de cercle.

La surface de butée 76 s'étend perpendiculairement au bord latéral 46 sur une largeur inférieure à 10% de la largeur de la tablette 32, prise entre ses bords latéraux 46.

Le bossage inférieur 62 est formé sous le corps 40 de la tablette au-dessous de la surface supérieure de butée 76. Il délimite une surface de guidage 78, de convexité dirigée vers le bas et de courbure centrée sur l'axe B-B' lorsque la tablette 32 occupe chaque position inclinée.

La saillie 64 fait saillie transversalement par rapport au corps 40 dans le prolongement transversal du bord avant 42. Elle s'étend en regard de la marche 60.

La saillie 64 délimite avec la marche 60 une encoche 80 d'axe transversal traversant verticalement le corps 40 de la tablette et débouchant latéralement vers l'extérieur en regard des supports 30. La largeur de l'encoche 80 est supérieure à l'épaisseur de la paroi de guidage 72.

La saillie 64 délimite, en regard de l'encoche 80, une surface arrière concave 82 de retenue de la tablette lorsque la saillie 64 est engagée dans la coulisse 74. La surface de retenue 82 présente une section de courbure centrée sur l'axe B-B', prise dans un plan vertical longitudinal.

Dans chaque position inclinée de la tablette 32, La distance radiale d₂ qui sépare l'axe B-B' de la surface de retenue 82 est supérieure à la distance radiale dᵢ qui sépare l'axe B-B' de la surface de butée 76 délimitée par la marche 60. La distance radiale d₃ qui sépare la surface de guidage 78 de l'axe B-B' est comprise entre la distance radiale d₁ et la distance radiale d₂.

La saillie 64 délimite en outre le long de son bord avant, une arête avant 84.

Dans cet exemple, la saillie 64 s'étend transversalement jusqu'à une extrémité libre située sensiblement dans le même plan perpendiculaire à l'axe B-B' que le bord latéral 46 au voisinage de la marche 60. Elle présente une section sensiblement trapézoïdale dans un plan vertical longitudinal.

La paroi de pivotement 70 s'étend sensiblement horizontalement. Elle est située au-dessus et à l'écart de la surface supérieure de l'appui plan 36.

La paroi de pivotement 70 présente une surface de butée complémentaire 90 qui s'étend transversalement le long de son bord arrière, et une surface inférieure 92 qui s'étend en regard de la paroi de guidage 72.

La surface de butée complémentaire 90 présente une largeur sensiblement égale à la largeur de la surface de butée 76 de la marche 60. Elle présente une courbure, prise dans un plan longitudinal perpendiculaire à l'axe B-B', centrée sur l'axe B-B' et de forme complémentaire à la courbure de la surface de butée 76. Elle présente ainsi une convexité dirigée vers l'arrière.

La surface inférieure 92 de la paroi de pivotement 70 présente une faible inclinaison dirigée vers le bas et vers l'avant par rapport à un plan horizontal. Elle s'étend à l'arrière, en regard de la paroi de guidage 72, et à l'avant, en regard de la coulisse 74. En variante, cette surface inférieure 92 est horizontale.

La paroi de guidage 72 fait saillie sensiblement horizontalement vers l'avant à partir de l'appui plan 36. Elle présente une surface de guidage complémentaire 94 de la rotation de la tablette 30, de forme complémentaire à la surface de guidage 78 délimitée par le bossage 62, et une surface de retenue complémentaire 96 de la tablette, de forme complémentaire à la surface de retenue 82 de la saillie 64.

La surface de guidage complémentaire 94 délimite un évidement ouvert vers le haut, de forme complémentaire au bossage 62.

La paroi de guidage 72 est légèrement déformable vers le bas dans la coulisse 74 lors de l'insertion de la tablette 32 entre sa position dégagée et sa position engagée dans le mécanisme 34, entre une configuration déformée d'insertion de la tablette 32 et une configuration de repos et de retenue de la tablette 32. En variante, la tablette 32 est elle-même flexible par rapport à son plan moyen pour faciliter son insertion dans le mécanisme 34.

La surface de guidage complémentaire 94 présente dans son évidement une courbure centrée sur l'axe B-B'. Elle est située radialement par rapport à l'axe B-B' à une distance d₃ comprise entre la distance d₁ séparant l'axe B-B' de la surface complémentaire de butée 90 et la distance d₂ séparant l'axe B-B' de la surface complémentaire de retenue 96.

Lorsque la tablette 32 est engagée dans le mécanisme 34 et qu'elle occupe sa position horizontale, la surface de butée 76 est appliquée contre la surface de butée complémentaire 90. De même, la surface de guidage 78 est appliquée contre la surface de guidage complémentaire 94 de la paroi 72.

En outre, la surface inférieure 92 de la paroi de pivotement, et la surface de guidage complémentaire 94 délimitent entre elles un passage 98 d'insertion de la saillie 64 dans la coulisse 74. Le passage 98 s'ouvre vers l'arrière sous la surface de butée complémentaire 90 en regard de l'appui 36. Il s'ouvre à l'avant vers le bas dans la coulisse 74. Le passage 98 s'étend sensiblement horizontalement.

La hauteur maximale du passage 98 est supérieure à la hauteur de la saillie 64 lorsque la tablette 32 occupe sa position horizontale. Ainsi, la saillie 64 peut être librement déplacée en translation dans le passage 98 lors du passage de la tablette 32 de sa configuration engagée à sa configuration désengagée.

La surface de retenue complémentaire 96 présente une convexité dirigée vers le bas et vers l'avant.

La coulisse 74 présente une forme générale incurvée vers le bas et vers l'arrière. Elle s'étend entre la surface de retenue complémentaire 96 et une surface convexe 100, de courbure centrée sur l'axe B-B'. La surface convexe 100 est située radialement à l'écart de la surface de retenue complémentaire 96.

La distance qui sépare radialement la surface complémentaire 96 de la surface convexe 100 est sensiblement égale à la distance qui sépare radialement la surface de retenue 82 de l'arête avant 84 sur la saillie 64, lorsque celle-ci est engagée dans la coulisse 74. Ainsi, l'arête 84 reste sensiblement au voisinage de la surface convexe 100 lors du déplacement de la saillie 64 dans la coulisse 74.

La coulisse 74 débouche vers le haut à l'avant dans le passage 98. Elle est obturée vers l'arrière par une surface arrière de fin de course 102.

La surface arrière 102 est conformée pour que, lorsque la saillie 64 entre en contact avec la surface arrière 102, la tablette est inclinée d'un angle supérieur à 30 ° et, par exemple, compris entre 0 ° et 50 ° par rapport à un plan horizontal.

La coulisse 74 s'étend ainsi sur une étendue angulaire d'environ 50° autour de l'axe B-B', prise entre le passage 98 et la surface arrière 102.

Lors du pivotement de la tablette 32 autour de l'axe B-B', la surface arrière de retenue 96 de la saillie 64 coulisse le long de la surface complémentaire de retenue 96 jusqu'à ce que la saillie 64 entre en contact avec la surface arrière de fin de course 102. La tablette 32 occupe alors sa position inclinée de fin de course.

Chaque cordon 66 est fixé sur la tablette 32 en un premier point de fixation situé au voisinage du bord arrière 44 de la tablette et est fixé en un deuxième point de fixation sur le hayon 18 (non représenté). Les cordons 66 sont propres à exercer sur la tablette 32 une force dirigée vers le haut et vers l'arrière ou l'avant, en fonction de la configuration du hayon 18, lorsque le hayon 18 passe de sa position d'obturation du coffre 12 à sa position d'ouverture du coffre.

Le montage et le fonctionnement du premier ensemble arrière 10 selon l'invention va maintenant être décrit.

Initialement, la tablette 32 est positionnée hors du coffre 12 à l'écart des supports 30. La tablette 32 est désengagée du mécanisme d'articulation 34.

Dans cette position, chaque saillie 64 est située hors du passage d'insertion 98 et hors de chaque coulisse 74.

Lorsqu'un utilisateur souhaite monter la tablette 32 dans le coffre, il place le hayon 18 dans sa position ouverte. Puis, il pose la tablette 32 horizontalement sur les appuis 36. Il fait ensuite coulisser la tablette 32 vers l'avant et engage chaque saillie 64 dans un passage d'insertion 98 entre la paroi de guidage 72 et la paroi de pivotement 70.

Lors de ce déplacement, la paroi de guidage 72 se déforme légèrement pour faire passer le bossage 62 entre la paroi de pivotement 70 et la paroi de guidage 72 et amener la surface de guidage 78 dans l'évidement délimité par la surface complémentaire de guidage 94. La paroi de guidage 72 passe de sa configuration de repos à sa configuration déformée, puis de sa configuration déformée à sa configuration de repos lorsque le bossage 62 est reçu dans l'évidement défini par la paroi de guidage 72.

La surface supérieure de butée 76 délimitée par la marche 60 est alors en contact avec la surface complémentaire de butée 90 sur la paroi de pivotement 70.

La tablette 32 occupe sa position horizontale de repos en appui sur les supports 36 le long de ses bords latéraux 46. Elle est maintenue le long d'un axe longitudinal C-C' par rapport aux supports 30, par la coopération entre le bossage 62 et l'évidement ménagé dans la paroi de guidage 72.

Le hayon 18 peut alors être refermé pour caler le bord arrière 44 de la tablette 32 en translation le long de l'axe longitudinal C-C' du véhicule.

La tablette 32 masque alors le compartiment inférieur 52 et permet le support d'objets dans le compartiment supérieur 54.

Lorsqu'un utilisateur souhaite accéder au coffre 12, il fait passer le hayon 18 de sa position d'obturation du coffre 12 à sa position d'accès au coffre 12.

Lors de ce déplacement, les cordons 66 exercent au voisinage du bord arrière 44 de la tablette une force dirigée vers le haut et vers l'arrière ou l'avant pour faire passer la tablette 32 de sa position horizontale à au moins une position inclinée.

La saillie 64 s'engage alors dans la coulisse 74. La paroi de guidage 72 pénètre dans l'encoche 80 et le bord avant 42 de la tablette 32 descend dans le compartiment inférieur 52, sous les appuis 36.

Lors de ce passage, la surface de butée 76 coulisse autour de la surface de butée complémentaire 90, empêchant ainsi un déplacement radial vers l'avant de la surface de butée 76 et de la tablette 32 par rapport à l'axe B-B'. L'axe B-B' de rotation de la tablette 32 reste donc fixe par rapport aux supports 30.

En outre, la saillie 64 se déplace dans la coulisse 74 et la surface de retenue 82 entre en contact avec la surface complémentaire 96 de retenue, pour coulisser sur cette surface 96.

La coopération entre la surface de retenue 82 et la surface complémentaire de retenue 96 bloque le déplacement radial de la tablette 32 et de la surface de butée 76 vers l'arrière par rapport à l'axe B-B', ce qui empêche le désengagement de la tablette 32 hors de son mécanisme d'articulation 34, même si la force de traction exercée par les cordons 66 est dirigée vers l'arrière. Cette retenue est assurée pour chaque position inclinée de la tablette 32.

Par suite, dès que la tablette 32 quitte sa position horizontale de repos et d'engagement dans le mécanisme 34, son extraction hors du mécanisme 34 est empêchée et son guidage en rotation est assuré à la fois par la coopération entre la surface supérieure de butée 76 définie sur la tablette 32 et la surface complémentaire de butée 90 définie sur chaque support 30, et par la coopération entre la surface de retenue 82 définie sur la tablette 32 et la surface de retenue complémentaire 96 définie sur chaque support 30.

Ainsi, chaque point de la tablette 32 reste sensiblement à distance constante de l'axe B-B' lors du pivotement de la tablette 32 autour de l'axe B-B', pour chaque position inclinée de la tablette.

En outre, la conformation arrondie de la surface de guidage 78 définie sous la tablette 32 qui coulisse sur la surface complémentaire 94 de guidage définie par chaque support 30 au moins au début de la course de la tablette 32 entre sa position horizontale et sa position inclinée de fin de course, empêche le blocage de la tablette 32 et facilite sa rotation.

Pour extraire à nouveau la tablette 32 hors des supports 30 et la désengager du mécanisme 34, la tablette 32 est rebasculée dans sa position horizontale.

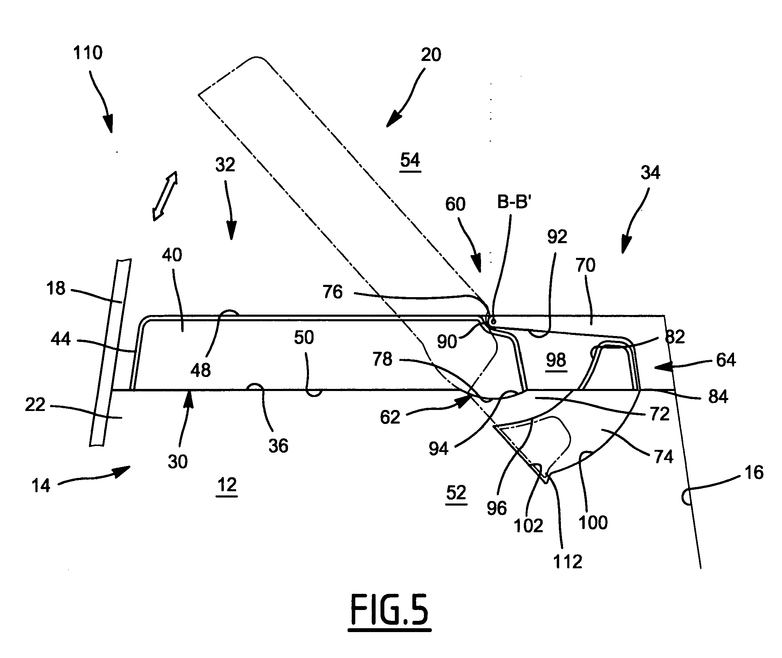

Dans une variante de dispositif de masquage 110, représentée sur la Figure 5, la tablette 32 est déplaçable indépendamment du hayon 18. Aucun cordon 66 ne relie la tablette au hayon 18.

Dans ce cas, la tablette 32 peut être basculée manuellement par un utilisateur entre sa position horizontale, chaque position inclinée intermédiaire, et sa position inclinée de fin de course.

Dans une autre variante représentée également sur la Figure 5, la surface convexe 100 définit, au voisinage de la surface arrière de fin de course 102, un logement d'insertion de l'arête 84, destiné à recevoir l'arête 84 pour assurer une immobilisation réversible de la tablette 32 dans sa position inclinée de fin de course, sans qu'il soit nécessaire d'exercer manuellement une force de retenue vers le haut.

Dans une autre variante non représentée, la tablette 32 comprend un tiroir de rangement inséré dans le corps 40 et déployable en gigogne par rapport au corps 40.

Grâce à l'invention qui vient d'être décrite, il est possible de disposer d'un dispositif de masquage 20 de véhicule automobile qui est simple à monter dans un véhicule et qui présente néanmoins une tenue mécanique adéquate dans le véhicule, à la fois lorsque la tablette 32 occupe sa position horizontale et lorsqu'elle est pivotée autour de son axe de rotation.

En outre, le mécanisme 34 d'articulation de la tablette 32 peut être utilisé quel que soit le type d'entraînement en rotation de la tablette prévu sur le véhicule, notamment lorsque des cordons 66 exerçant indifféremment une force dirigée vers l'avant, vers l'arrière ou à la fois vers l'avant ou vers l'arrière, actionnent la tablette 32 lors du déplacement du hayon 18.

Dès que la tablette 32 a commencé à pivoter, il est en effet impossible de l'extraire de son mécanisme d'articulation 34, quel que soit le sens d'application de la force de déplacement de la tablette.

Cette tablette 32 est en outre très facile à réaliser en une seule étape en étant venue de matière, avec des matériaux divers.

Le mécanisme 34 ne nécessite en outre pas de complication majeure de la structure des flancs latériaux 14 du véhicule, compte tenu de la simplicité de la forme des supports 30.

Le montage de la tablette 32 est en outre facilité, puisque l'engagement de la tablette 32 dans son mécanisme d'articulation 34 est réalisé sensiblement en position horizontale de la tablette, ce qui limite les interférences avec d'autres éléments de caisse du véhicule automobile comme les piliers.

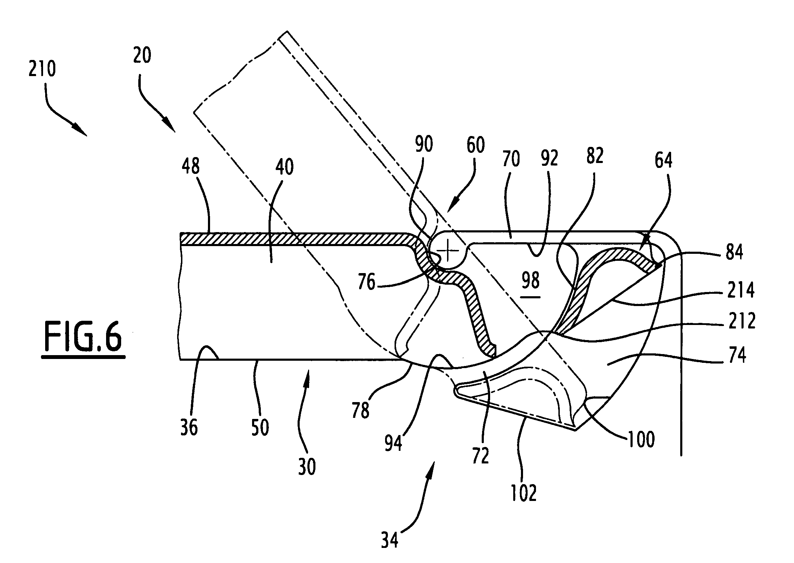

Un troisième ensemble 210 selon l'invention est illustré par la Figure 6.

Cet ensemble diffère de l'ensemble 10 en ce que l'arête 84 est située au-dessus et à l'arrière du bord inférieur 212 de la surface de retenue 82 dans la position horizontale de la tablette 32.

Ainsi, la saillie 64 définit une surface inférieure 214 inclinée entre le bord inférieur 212 et l'arête 84, qui s'étend totalement au-dessus d'un plan P' passant par le bord inférieur 212, ce plan P' étant incliné d'un angle supérieur à 10° et inférieur à 90° par rapport au plan moyen de la tablette 32. De même, le bord arrière 42 de la tablette 32 n'est pas perpendiculaire au plan moyen de la tablette, mais s'étend sensiblement dans le plan incliné P'.

Ainsi, dans ce mode de réalisation, la pénétration de la saillie 64 dans le compartiment inférieur 52 est minimisée, lors du pivotement de la tablette 32 autour de l'axe B-B', ce qui augmente le volume de chargement disponible. Cette pénétration maximale est ainsi inférieure à la hauteur moyenne du corps 42 de la tablette prise entre les surfaces 48, 50.

Dans une autre variante, la largeur maximale de la saillie 64, prise transversalement est inférieure à la largeur de la surface de butée 76, de sorte que la saillie 64 ne s'étend pas transversalement jusqu'au bord latéral 46 de la tablette 32.

## Revendications

1. Dispositif (20) de masquage arrière de véhicule automobile, du type comprenant:
- des supports (30) destinés à être solidaires des flancs (14) du véhicule automobile;
- une tablette (32) montée rotative autour d'un axe transversal (B-B') dans les supports (30) entre une position sensiblement horizontale disposée en appui sur les supports (30) et une position inclinée de fin de course ;
- un mécanisme (34) d'articulation de la tablette (32) par rapport aux supports (30) comprenant, pour chaque support (30), au moins une surface de butée (76) délimitée par la tablette (32) et une surface de butée complémentaire (90) délimitée par le support (30), la surface de butée (76) et la surface de butée complémentaire (90) étant destinées à coulisser l'une sur l'autre lors du pivotement de la tablette (32) autour de son axe transversal (B-B') pour empêcher le déplacement radial de la tablette (32) par rapport à l'axe transversal (B-B') vers l'avant, la surface de butée (76) et la surface de butée complémentaire (90) étant situées radialement à une première distance de l'axe transversal (B-B'),
le mécanisme d'articulation (34) de la tablette (32) comprenant une surface de retenue (82) solidaire de la tablette (32) et une surface de retenue complémentaire (96) définie par chaque support (30), la surface de retenue (82) et la surface de retenue complémentaire (96) étant situées radialement à une deuxième distance de l'axe transversal (B-B') supérieure à la première distance,
dans lequel la surface de retenue (82) et la surface de retenue complémentaire (96) coopèrent pour chaque position inclinée de la tablette (32) entre sa position sensiblement horizontale et sa position inclinée de fin de course pour empêcher le déplacement radial vers l'arrière de la tablette (32) par rapport à l'axe transversal (B-B'),
**caractérisé en ce que**, dans la position sensiblement horizontale, la surface de retenue (82) est disposée à l'écart de la surface de retenue complémentaire (96) pour permettre un déplacement radial de la tablette (32) vers l'arrière entre une position engagée dans chaque support (30) et une position désengagée à l'écart des supports (30).

2. Dispositif (20) selon la revendication 1 **caractérisé en ce que** la tablette (32) délimite une surface de guidage (78), de courbure centrée sur l'axe transversal (B-B'), chaque support (30) présentant une surface de guidage complémentaire (94) de forme complémentaire à la surface de guidage (78), la surface de guidage (78) et la surface de guidage complémentaire (94) étant situées radialement par rapport à l'axe transversal (B-B') entre la surface de butée complémentaire (90) et la surface de retenue complémentaire (96) dans au moins une position inclinée de la tablette (32) entre sa position horizontale et sa position inclinée de fin de course.

3. Dispositif (20) selon l'une quelconque des revendications précédentes, **caractérisé en ce que** le mécanisme (34) d'articulation de la tablette (32) comprend, pour chaque support (30), une saillie de retenue (64) solidaire de la tablette délimitant la surface de retenue (82), la saillie de retenue (64) étant reçue dans une coulisse (74) délimitée par chaque support (30), la coulisse (74) définissant la surface de retenue complémentaire (96).

4. Dispositif (20) selon la revendication 3, **caractérisé en ce que** chaque support (30) délimite une paroi de pivotement (70) définissant la surface de butée complémentaire (94) et une paroi de guidage (72) définissant la surface de retenue complémentaire (96), la paroi de guidage (72) et la paroi de pivotement (70) délimitant entre elles un passage sensiblement horizontal (98) d'insertion de la saillie (64) dans la coulisse (74).

5. Dispositif (20) selon la revendication 4, **caractérisé en ce que** la surface de retenue (82) délimitée sur la saillie (64) et la surface de butée (76) s'étendent sensiblement en regard l'une de l'autre et définissent entre elles une encoche (80) traversant la tablette (32) perpendiculairement à l'axe de pivotement (B-B'), la paroi de guidage (72) étant reçue dans l'encoche (80) lors du pivotement de la tablette (32) dans chaque position inclinée (72) entre sa position horizontale et sa position inclinée de fin de course.

6. Dispositif (20) selon l'une des revendications 4 ou 5, **caractérisé en ce que** la paroi de guidage est déformable élastiquement dans la coulisse (74) entre une configuration d'insertion de la tablette (32) dans le mécanisme d'articulation (34) et une configuration de maintien de la tablette (32) dans le mécanisme d'articulation (34).

7. Dispositif (20) selon l'une quelconque des revendications 3 à 6, **caractérisé en ce que** la saillie (64) délimite, à l'opposé de la surface de retenue (82), une protubérance (84) de blocage destinée à entrer en contact en au moins une position donnée entre la position horizontale et la position inclinée de fin de course avec une surface (100) définissant la coulisse (74), pour retenir la tablette (32) dans la position donnée.

8. Dispositif (20) selon l'une quelconque des revendications 3 à 7, **caractérisé en ce que** la saillie (64) délimite une surface inférieure (214) située à l'opposé de la surface de retenue (82) inclinée d'un angle non nul et inférieur à 90° par rapport à un plan moyen de la tablette (32), le plan moyen étant sensiblement horizontal dans la position horizontale de la tablette (32).

9. Ensemble arrière (10 ; 110, 210) de véhicule automobile, **caractérisé en ce qu'**il comprend :
- des flancs latéraux (14) délimitant un coffre (12),
- un hayon mobile (18) destiné à obturer le coffre (12) vers l'arrière ;
- un dispositif de masquage (20) selon l'une quelconque des revendications précédentes, les supports (30) étant solidaires des flancs latéraux (14) du véhicule automobile.

10. Ensemble (10) selon la revendication 9, **caractérisé en ce que** le hayon (18) est monté pivotant autour d'un axe transversal de hayon par rapport aux flancs (14) entre une position d'obturation du coffre (12) et une position d'accès au coffre (12), au moins un cordon (66) reliant le hayon (18) à la tablette (32) pour la faire pivoter entre sa position horizontale et sa position inclinée de fin de course lors de l'ouverture du hayon (18), le ou chaque cordon (66) exerçant sur au moins une partie de la course du hayon (18) une force comprenant une composante dirigée vers l'arrière.

## Claims

1. A rear masking device (20) for a motor vehicle, of the type comprising:
- supports (30) intended to be integral with the sides (14) of the motor vehicle;
- a shelf (32) rotatably mounted about a transverse axis (B-B') in the supports (30) between a substantially horizontal position disposed so as to bear on the supports (30) and an inclined limit of travel position;
- a mechanism (34) for articulation of the shelf (32) relative to the supports (30) comprising, for each support (30), at least one abutment surface (76) delimited by the shelf (32) and a complementary abutment surface (90) delimited by the support (30) , the abutment surface (76) and the complementary abutment surface (90) being intended to slide on each other during the pivoting of the shelf (32) about its transverse axis (B-B') in order to prevent radial movement of the shelf (32) in a forward direction with respect to the transverse axis (B-B') , the abutment surface (76) and the complementary abutment surface (90) being located radially at a first distance from the transverse axis (B-B'),
the mechanism (34) for articulation of the shelf (32) comprising a retaining surface (82) integral with the shelf (32) and a complementary retaining surface (96) defined by each support (30), the retaining surface (82) and the complementary retaining surface (96) being located radially at a second distance from the transverse axis (B-B') which is greater than the first distance,
in which the retaining surface (82) and the complementary retaining surface (96) co-operate for each inclined position of the shelf it (32) between its substantially horizontal position and its inclined limit of travel position in order to prevent radial movement of the shelf (32) towards the rear with respect to the transverse axis (B-B'),
**characterized in that**, in the substantially horizontal position, the retaining surface (82) is disposed away from the complementary retaining surface (96) in order to permit radial movement of the shelf (32) towards the rear between a position engaged in each support (30) and a disengaged position away from the supports (30).

2. A device (20) according to claim 1, **characterized in that** the shelf (32) delimits a guide surface (78) , having a curvature centred on the transverse axis (B-B'), each support (30) having a complementary guide surface (94) of a shape complementary to the guide surface (78), the guide surface (78) and the complementary guide surface (94) being located radially with respect to the transverse axis (B-B') between the complementary abutment surface (90) and the complementary retaining surface (96) in at least one inclined position of the shelf (32) between its horizontal position and its inclined limit of travel position.

3. A device (20) according to any one of the preceding claims, **characterized in that** the mechanism (34) for articulation of the shelf (32) comprises, for each support (30), a retaining projection (64) integral with the shelf delimiting the retaining surface (82), the retaining projection (64) being received in a slide (74) delimited by each support (30), the slide (74) defining the complementary retaining surface (96).

4. A device (20) according to claim 3, **characterized in that** each support (30) delimits a pivot wall (70) defining the complementary abutment surface (94) and a guide wall (72) defining the complementary retaining surface (96), the guide wall (72) and the pivot wall (70) delimiting between them a substantially horizontal passage (98) for insertion of the projection (64) into the slide (74).

5. A device (20) according to claim 4, **characterized in that** the retaining surface (82) delimited on the projection (64) and the abutment surface (76) extend substantially opposite one another and define between them a notch (80) passing through the shelf (32) perpendicularly to the pivot axis (B-B'), the guide wall (72) being received in the notch (80) during the pivoting of the shelf (32) into each incline position (72) between its horizontal position and its inclined limit of travel position.

6. A device (20) according to claim 4 or claim 5, **characterized in that** the guide wall is resiliently deformable in the slide (74) between a configuration for insertion of the shelf (32) into the articulation mechanism (34) and a configuration for holding the shelf (32) in the articulation mechanism (34).

7. A device (20) according to any one of claims 3 to 6, **characterized in that** the projection (64) delimits, opposite from the retaining surface (82), a locking protuberance (84) intended to come into contact, in at least one given position between the horizontal position and the inclined limit of travel position, with a surface (100) defining the slide (74), in order to retain the shelf (32) in the given position.

8. A device (20) according to any one of claims 3 to 7, **characterised in that** the projection (64) delimits a lower surface (214) located opposite to the retaining surface (82) and inclined at a non-zero angle less than 90° with respect to a median plane of the shelf (32), the median plane being substantially horizontal in the horizontal position of the shelf (32).

9. A rear assembly (10; 110, 210) for a motor vehicle, **characterized in that** it comprises :
- lateral sides (14) delimiting a boot (12),
- a movable tailgate (18) intended to close off the boot (12) towards the rear;
- a masking device (20) according to any one of the preceding claims, the supports (30) being integral with the lateral sides (14) of the motor vehicle.

10. An assembly (10) according to claim 9, **characterized in that** the tailgate (18) is pivotally mounted about a transverse tailgate axis relative to the sides (14) between a position in which the boot (12) is closed off and a position for access to the boot (12), at least one cord (66) connecting the tailgate (18) to the shelf (32) in order to pivot it between its horizontal position and its inclined limit of travel position during the opening of the tailgate (18), the or each cord (66) extending over at least a part of the travel of the tailgate (18) a force comprising a rearwardly directed component.

## Patentansprüche

1. Vorrichtung (20) zum Abdecken des Laderaums eines Kraftfahrzeuges, umfassende
- Träger (30), die vorgesehen sind, mit den Seitenteilen (14) des Kraftfahrzeugs verbunden zu sein;
- eine Ablageplatte (32), die in den Trägern (30) drehbar um eine Querachse (3-B')zwischen einer im Wesentlichen horizontalen Stellung, bei der die Ablageplatte auf den Trägern aufliegt, und einer geneigten Endposition montiert ist;
- einen Mechanismus (34) zum Anlenken der Ablageplatte (32) in Bezug auf die Träger (30), der für jeden Träger (30) mindestens eine von der Ablageplatte (32) begrenzte Anschlagfläche (76) und eine komplementäre, von dem Träger (30) begrenzte Anschlagsfläche (90) umfasst, wobei die Anschlagfläche (76) und die komplementäre Anschlagfläche (90) vorgesehen sind, während des Schwenkens der Ablageplatte (32) um ihre Querachse (B-B') aufeinander zu gleiten, um die radiale Verschiebung der Ablageplatte (32) in Bezug auf die Querachse (B-B') nach vorn zu vermeiden, wobei die Anschlagsfläche (76) und die komplementäre Anschlagfläche (90) radial in einem ersten Abstand zur Querachse (B-B') angeordnet sind,
wobei der Mechanismus (34) zum Anlenken der Ablageplatte (32) eine Rückhaltefläche (82), die mit der Ablageplatte (32) verbunden ist, und eine komplementäre Rückhaltefläche (96) aufweist, die von jedem Träger (30) begrenzt ist, wobei die Rückhaltefläche (82) und die komplementäre Rückhaltefläche (96) radial in einem zweiten Abstand zur Querachse (B-B'), größer als der erste Abstand, anbeordnet ist,
bei der die Rückhaltefläche (82) und die komplementäre Rückhaltefläche (96) für jede geneigte Position der Ablageplatte (32) zwischen ihrer im Wesentlichen horizontalen Position und ihrer geneigten Endposition zusammeriarbeiten, um die radiale Verschiebung nach hinten zur Ablageplatte (32) gesehen in Bezug auf die Querachse (B-B') zu vermeiden,
**dadurch gekennzeichnet, dass** in der im Wesentlichen horizontalen Position die Rückhaltefläche (82) mit Abstand zu der komplementären (96) angeordnet ist, um eine radiale Verschiebung der Ablageplatte (32) nach hinten zwischen einer Position, in der sie mit jedem Träger (30)in Eingriff ist, und einer Position, in der sie im Abstand zu den Trägern (30) außer Eingriff ist.

2. Vorrichtung (20) nach Anspruch 1, **dadurch gekennzeichnet, dass** die Ablageplatte (32) eine Führungsfläche (78) mit einer auf die Querachse (B-B') zentrierten Krümmung begrenzt, wobei jeder Träger (30) eine komplementäre Führungsfläche (94) von zur Führungsfläche (78) komplementärer Form aufweist, wobei die Führungsfläche (78) und die komplementäre Führungsfläche (94) radial in Bezug auf die Querachse (B-B') zwischen der komplementären Anschlagfläche (90) und der komplementären Rückhaltefläche (96) in mindestens einer geneigten Position der Ablageplatte (32) zwischen ihrer horizontalen Position und ihrer geneigten Endposition anbeordnet sind.

3. Vorrichtung (20) nach einem beliebigen der vorhergehenden Ansprüche, **dadurch gekennzeichnet, dass** der Mechanismus (34) zum Anlenken der Ablageplatte (32) für jeden Träger (30) einen Rückhaltevorsprung (64), der mit der Ablageplatte verbunden ist und die Rückhaltefläche, (82) begrenzt, umfasst, wobei der Rückhaltevorsprung (64) in einer Kulisse (74) aufgenommen ist, die durch jeden Träger (30) umgrenzt ist und die die komplementäre Rückhaltefläche (96) begrenzt.

4. Vorrichtung (20) nach Anspruch 3, **dadurch gekennzeichnet, dass** jeder Träger (30) eine Schwenkwand (70), die die komplementäre Anschlagfläche (94) bildet, und eine Führungswand (72) begrenzt, die die komplementäre Rückhaltefläche (96) bildet, wobei die Führungswand (72) und die Schwenkwand (70) zwischen sich einen im Wesentlichen horizontalen Durchgang (98) zur Einführung des Vorsprungs (64) in die Kulisse (74) eingrenzen.

5. Vorrichtung (20) nach Anspruch 4, **dadurch gekennzeichnet, dass** die auf dem Vorsprung (64) begrenzte Rückhaltefläche (82) und die Anschlagflache (76) sich im Wesentlichen einander gegenüberliegemd erstrecken und zwischen sich eine Ausnehmung (80) definieren, die die Ablageplatte (32) senkrecht zur Schwenkachse (B-B') durchquert, wobei die Führungswand (72) in der Ausnehmung (80) während des Schwenkens der Ablageplatte (32) in jeder geneigten Position (72) zwischen ihrer horizontalen Position und ihrer geneigten Endposition aufgenommen ist.

6. Vorrichtung (20) nach einem der Ansprüche 4 oder 5, **dadurch gekennzeichnet, dass** die Führungswand in der Kulisse zwischen einer Konfiguration, des Einführens der Ablageplatte (32) in den Anlenkmechanismus (34) und einer Konfiguration des Haltens der Ablageplatte (32) in dem Anlenkmechanismus elastisch verformbar ist,

7. Vorrichtung (20) nach einem beliebigen der Ansprüche 3 bis 6, **dadurch gekennzeichnet, dass** der Vorsprung (64) entgegengesetzt zur Rückhaltefläche (82) eine Blockiererhebung (84) begrenzt, die dazu dient, in mindestens einer vorgegebenen Position zwischen der horizontalen Position und der geneigten Endposition mit einer Fläche (100) in Kontakt zu treten, die die Kulisse definiert, um die Ablageplatte (32) in der vorgegebenen Position zu halten.

8. Vorrichtung (20) nach einem beliebigen der Ansprüche 3 bis 7, **dadurch gekennzeichnet, dass** der Vorsprung (64) eine untere Fläche (214) begrenzt, die entgegengesetzt zur Rückraltefläche (82) liegt und um einen Winkel, der nicht Null und kleiner als 90° in Bezug auf eine mittlere Ebene der Ablageplatte (32) ist, geneigt ist, wobei die mittlere Ebene in der horizontalen Prosition der Ablageplatte (32) im Wesentlichen horizontal ist.

9. Rückanordnung (10; 110; 210) für Kraftfahrzeuge, **dadurch gekennzeichnet, dass** sie umfasst:
- Seitenteile (14), die einen Kofferraum (12) eingrenzen;
- eine Heckklappe (18), die dazu dient, den Kofferraum (12) nach hinten hin zu verschließen;
- eine Vorrichtung (20) zum Abdecken nach einem beliebigen der vorhergehenden Ansprüche, wobei die Träger (30) mit den Seitenteilen (14) des Kraftfahrzeugs verbunden sind.

10. Anordnung (10) nach Anspruch 9, **dadurch gekennzeichnet, dass** die Heckklappe (18) schwenkbar um eine Querachse der Heckklappe in Bezug auf die Seitenteile (14) zwischen einer Position des Verschließens des Kofferraums und einer Position des Zugangs zum Kofferraum (12) montiert ist, wobei mindestens ein Band (66) die Heckklappe (18) mit der Ablageplatte (32) verbindet, um sie zwischen ihrer horizontalen Position und ihrer geneigten Endposition bei dem Öffnen der Heckklappe schwenken zu lassen, wobei das oder jedes Band (66) über mindestens einen Teil des Weges der Heckklappe (66) eine Kraft ausübt, die eine nach hinten gerichtete Komponente aufweist.
